**Europäisches Patentamt**

**European Patent Office**

**Office européen des brevets**

(19)

(11) **EP 1 207 660 A2**

## (12) EUROPEAN PATENT APPLICATION

(43) Date of publication:
**22.05.2002 Bulletin 2002/21**

(51) Int Cl.$^7$: **H04L 25/03**

(21) Application number: **01125547.8**

(22) Date of filing: **25.10.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **17.11.2000 JP 2000350993
03.09.2001 JP 2001266098**

(71) Applicant: **Hitachi Kokusai Electric Inc.
Tokyo 164-8511 (JP)**

(72) Inventors:
• **Wakamatsu, Makoto,
Hitachi Kokusai Electric Inc.
Tokyo (JP)**
• **Watanabe, Jun, Hitachi Kokusai Electric Inc.
Tokyo (JP)**

(74) Representative: **Liesegang, Eva
Forrester & Boehmert,
Pettenkoferstrasse 20-22
80336 München (DE)**

(54) **Time-sharing of a digital filter**

(57)    The present invention provides a digital filter which is used for a transmitter receiver in a mobile communication system and is capable of reducing the circuit scale.

The digital filter divides digital data comprising a plurality of channels into high-order and low-order bits.

The digital filter performs a filtering operation at a rate equivalent to a digital data input rate doubled and further multiplied by the number of channels in a time-sharing manner. The digital filter synthesizes filtering output results of data divided from the same digital data to generate a filtering output for each channel, enabling to reduce the circuit scale of the filtering operation section and the entire circuit scale.

FIG.1

EP 1 207 660 A2

**Description**

BACKGROUND OF THE INVENTION

1. Field of the invention

The present invention relates to a digital filter used for a transmitter receiver in a mobile communication system and more particularly to a digital filter capable of reducing the circuit scale.

2. Description of the Related Art

A spread spectrum communication is used for, say, W-CDMA (Wide-band Code Division Multiple Access) which is a communication method of the next generation mobile communication system. When a receiver receives a radio modulation signal for demodulating it in the spread spectrum communication, a correlation operation is performed between the radio modulation signal and a despread code. The demodulation is based on a correlation output value as an operation result. A digital filter is used as an apparatus for performing this correlation operation. Generally, a matched filter is used for this digital filter.

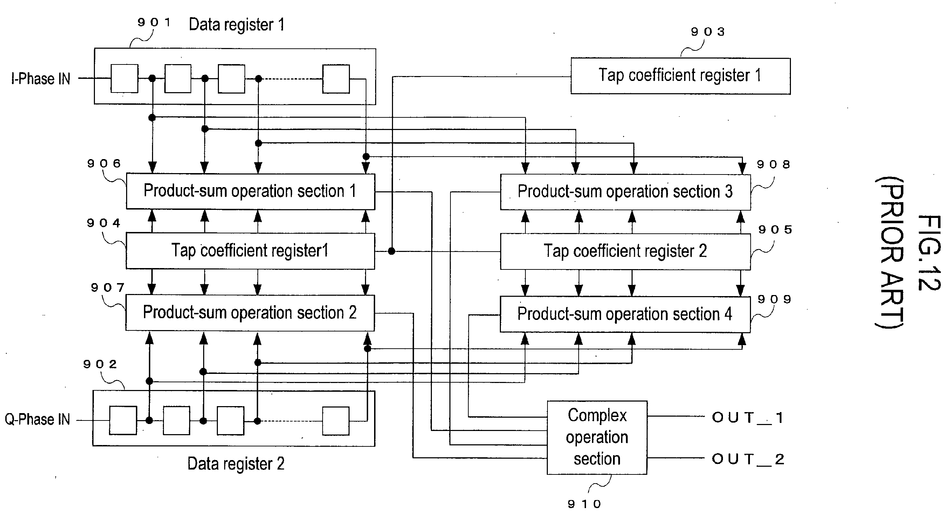

FIG. 12 is a block diagram of a conventional matched filter. The matched filter in FIG. 12 receives a complex modulated analog modulation signal and converts it into a digital signal. Then, a correlation operation is performed for the in-phase and the quadrature-phase for producing a correlation output for each phase.

The matched filter in FIG. 12 performs digital conversion and correlation operation for an analog modulation signal of 4-bit data transferred at 3.84 Mbps (chip rate). The matched filter provides a sample rate of 15.36 MHz, four times higher than the chip rate.

When an analog modulation signal is received at a receiver's antenna (not shown), an A/D converter (not shown) is used to convert the received signal into a digital signal at 15.36 MHz each for the in-phase (hereafter referred to as the I-phase) and the quadrature-phase (hereafter referred to as the Q-phase). This digital reception data is output to an I-phase data register 901 (data register 1 in FIG. 12) and a Q-phase data register 902 (data register 2 in FIG. 12).

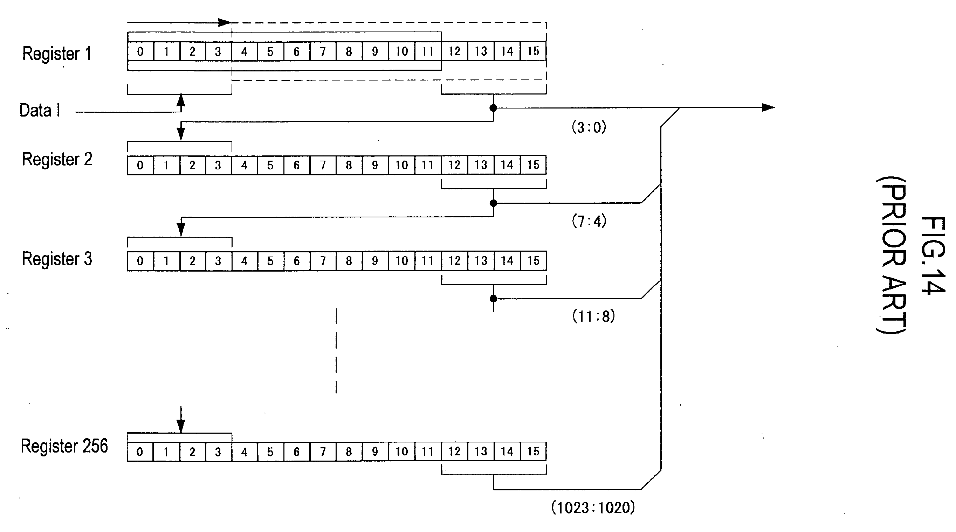

The I-phase data register 901 and the Q-phase data register 902 each are provided with 256 16-bit registers. FIG. 14 transition of reception data among the data registers.

When the digitally converted reception data is output to the data registers, the data is stored at an address from bits 0 to 3 of register 1.

When the new reception data is stored in register 1, the existing reception data stored in register 1 is shifted four bits to the right address in the figure. Namely, the reception data stored at an address from bits 0 to 3 is shifted to an address from bits 4 to 7. The subsequent reception data is also shifted four bits to the right sequentially.

When the new reception data is stored in register 1, reception data stored at bits 12 to 15 of register 1 is shifted to bits 0 to 3 of register 2 and is output to a product-sum operation section.

The same operation is performed for the other registers. Reception data is shifted and is output to the product-sum operation section. Reception data output from each register is unified and is output to the product-sum operation section as data comprising 1,024 bits (4*256).

Each register can store 16-bit data, namely reception data for one chip. The register delays data by sequentially shifting the reception data. The reception data is sequentially output at the sample rate. Reception data stored in last four bits of each register is output to the product-sum operation section. This means that reception data for 256 registers per chip, namely reception data for one symbol is output at every sample timing.

A Tap coefficient control section 903 generates the same despread code as a spread code used for modulating an analog modulation signal on a single-chip basis for each phase, namely on a single-bit basis at the chip rate. Despread codes are output to specified addresses of Tap coefficient registers 904 and 905. The Tap coefficient control section 903 outputs a despread code for the I-phase to the Tap coefficient register 904 and a despread code for the Q-phase to the Tap coefficient register 905.

The Tap coefficient registers 904 and 905 each comprise 256-bit registers. These registers sequentially store despread codes generated and output from the Tap coefficient control section 903 at specified addresses on a single-bit basis. Despread codes stored in the Tap coefficient registers 904 and 905 are output to the product-sum operation section at the sample rate.

When completing output of despread codes for 256 chips, the Tap coefficient control section 903 issues a control instruction to the Tap coefficient registers 904 and 905 for resetting the stored despread codes. Accordingly, the Tap coefficient registers 904 and 905 store despread codes equivalent to one symbol during a single-symbol period.

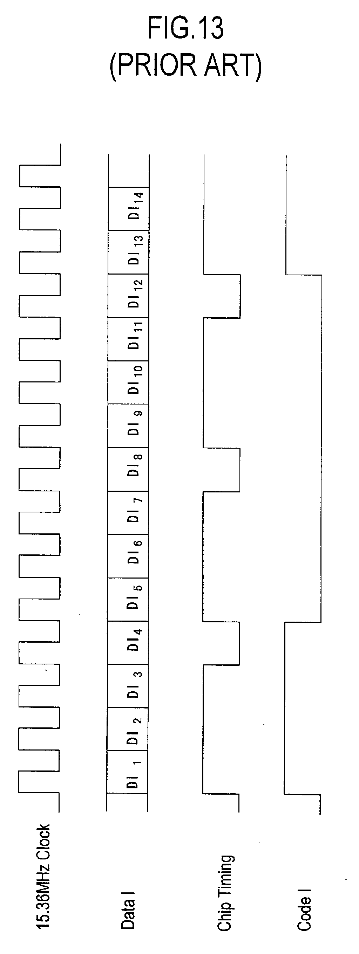

FIG. 13 is a timing chart for I-phase reception data (data I in FIG. 13) and a despread code (code I in FIG. 13) generated in the Tap coefficient control section 903.

As shown in FIG. 13, it is understood that a despread code is generated at chip timing, and reception data is output at sample timing. Though FIG. 13 exemplifies the I-phase, it is obvious that the same timing chart also applies to the Q-phase.

The I-phase reception data for 256 chips is output from an I-phase data register 901 and is output to product-sum operation sections 906 and 908. The Q-phase reception data for 256 chips is output from a Q-phase data register 902 and is output to product-sum operation sections 907 and 909.

Product-sum operation sections 906 to 909 perform a product-sum operation between reception data and a despread code stored in the Tap coefficient register for 256 chips at the sample rate.

A product-sum operation, namely a correlation operation is performed between I-phase reception data and an I-phase despread code in the product-sum operation section 906; between Q-phase reception data and an I-phase despread code in the product-sum operation section 907; between I-phase reception data and a Q-phase despread code in the product-sum operation section 908; and between Q-phase reception data and a Q-phase despread code in the product-sum operation section 909.

FIG. 15 is a block diagram of the product-sum operation section. Each product-sum operation section comprises a multiplier section 1201 and an adder section 1202.

The multiplier section 1201 comprises 256 multipliers. Each multiplier multiplies reception data for each chip by a despread code.

FIG. 16 is a block diagram of the multiplier section. A numeric value at the input denotes the number of bits for the data. As shown in FIG. 16, each multiplier multiplies four bits by one bit and outputs a 4-bit multiplication result. All multiplication results are unified. The unified result is output to the adder section 1202 as 1,024-bit data.

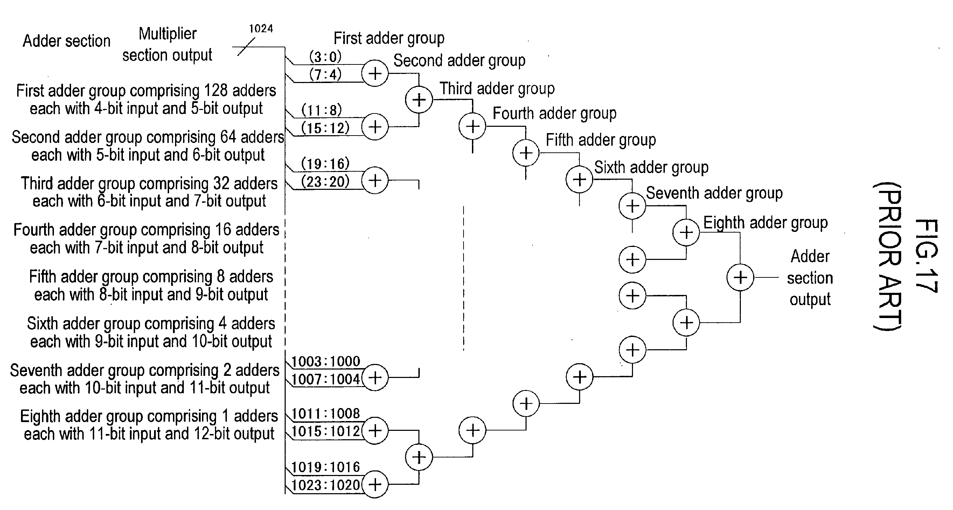

A multiplication result for each chip is output from a multiplier section 1201 and is output to an adder section 1202 for finding a sum of multiplication results. FIG. 17 is a block diagram of the adder section.

As shown in FIG. 17, the adder section 1202 is configured to calculate a sum of multiplication results by hierarchically arranging adders. When the multiplier section 1201 outputs 1,024-bit data, it is input to a first adder group in units of four bits. The first adder group comprises 128 adders which add 4-bit input data to each other and output 5-bit data. Each adder adds multiplication results at two adjacent chip timings and outputs an addition result to a second adder group.

The second adder group comprises 64 adders for adding 5-bit input data and outputting 6-bit data and adds addition results to each other which are output from two adjacent adders in the first adder group. Likewise, the adder section 1202 comprises a plurality of similarly configured adder groups. The last (eighth) adder finds a sum of all multiplication results, namely a correlation output. The last adder comprises a single adder which adds 11-bit input data and outputs 12-bit data.

Each multiplier in the multiplier section 1201 and each adder in the adder section 1202 operate at 15.36 MHz.

The aforementioned product-sum operation is performed for each of product-sum operation sections 906 to 909, generating four types of correlation output at every sample timing. Correlation outputs from the product-sum operation sections 906 to 909 are issued to a complex operation section 910, demodulating a correlation output waveform for each phase.

Given that I-phase and Q-phase reception data are assumed to be $D_I$ and $D_Q$ respectively, and I-phase and Q-phase despread codes are assumed to be $C_I$ and $C_Q$ respectively, the following equations represent demodulated reception data $T_I$ and $T_Q$ for the I-phase and the Q-phase, respectively.

$$T_I = D_I * C_I + D_Q * C_Q \qquad (1)$$

$$T_Q = D_Q * C_I - D_I * C_Q \qquad (2)$$

All terms in equations (1) and (2) are already calculated in the multiplier sections of the product-sum operation sections 906 to 909. In order to implement equations (1) and (2), the complex operation section 901 comprises two adders. The complex operation section 901 performs a complex operation by executing equations (1) and (2) at 15.36 MHz.

The complex operation section 901 generates a correlation output for each phase equivalent to one symbol at the sample rate. Based on this correlation output, it is possible to conduct filtering, namely detect optimal reception timing. According to this result, feedback processing and the like are performed for reception data demodulation and timing for generating a despread code in the Tap coefficient control section 903.

However, the aforementioned conventional digital filter requires many multipliers and adders for filtering output, causing a problem of enlarging a circuit scale of the digital filter. Especially, the multiplier and the adder process a large number of bits. This enlarges respective circuit scales and has a serious effect on the entire digital filter circuit.

A conventional example for solving these problems is proposed in Japanese Patent Application No. 1999-239040, filed August 31, 2000, "Digital Filter and Communication Apparatus" by Matsushita Electric Industrial Co., Ltd. (applicant) and Hironori Niide (inventor).

In this conventional example, the digital filter has an x-magnification interpolation function, where x is a natural number. An x-magnification interpolation is performed by distributing data in a time-sharing manner at a rate x times the input rate. Each distribution data is multiplied by a coefficient. These data are added to generate a filtering output for reducing a circuit scale and saving power consumption.

The digital filter according to the aforementioned conventional example is configured to multiplex 2-series data and distribute data for each series in a time-sharing manner. The conventional example just reduces the circuit scale by decreasing the number of multipliers and adders, insufficiently reducing the circuit scale.

## SUMMARY OF THE INVENTION

The present invention has been made in consideration of the foregoing. It is therefore an object of the present invention to provide a digital filter capable of filtering output for a plurality of series of digital data and reducing a circuit scale.

For solving the aforementioned problems of the prior art, the present invention can reduce the digital filter circuit scale by embodying a digital filter for filtering output of digital data comprising a plurality of channels, wherein the digital filter divides the digital data into a plurality of data entities for each channel, multiplies an input rate for the digital data by the number of channels, performs a filtering operation according to time sharing by further multiplying the input rate by the number of divisions, synthesizes filtering output results of data divided from the same digital data, and produces filtering output of the digital data for each channel based on a synthesis result.

The present invention can reduce the circuit scale of a matched filter for performing a correlation operation of in-phase and quadrature-phase reception data spread-modulated by one type of spread code by embodying a matched filter comprising: a data division section for dividing in-phase and quadrature-phase reception data into a plurality of data entities, wherein the reception data is obtained by converting an analog signal for the in-phase and the quadrature-phase spread-spectrum modulated by one type of spread code into a digital form at a specified sample rate, and for outputting the plurality of data entities as divided data in a time-sharing manner at a rate equivalent to the sample rate doubled and multiplied by the number of divisions; a data storage section for storing the divided data output from the data division section and outputting the stored divided data for each chip in a time-sharing manner at a rate equivalent to the sample rate doubled and multiplied by the number of divisions; a despread code generation section for generating and outputting a despread code identical to the spread code in units of chips; a correlation operation section comprising a plurality of multipliers and adders for performing a product-sum operation between the divided data output from the data storage section and the despread code output from the despread code generation section in a time-sharing manner at a rate equivalent to the sample rate doubled and multiplied by the number of divisions and for outputting a correlation operation result; and a data restoration section for synthesizing correlation operation results of divided data originating from the same reception data out of correlation operation results of divided data output from the correlation operation section and for performing correlation output of the in-phase and quadrature-phase reception data at every sample timing.

The present invention can reduce the circuit scale of a matched filter for performing a correlation operation of complex-modulated in-phase and quadrature-phase reception data by embodying a matched filter comprising: a data division section for dividing in-phase and quadrature-phase reception data into a plurality of data entities, wherein the reception data is obtained by converting an analog signal for the in-phase and the quadrature-phase spread-spectrum modulated by in-phase and quadrature-phase spread codes into a digital form at a specified sample rate, and for outputting the plurality of data entities as divided data in a time-sharing manner at a rate equivalent to the sample rate doubled and multiplied by the number of divisions; a data storage section for storing the divided data output from the data division section and outputting the stored divided data for each chip in a time-sharing manner at a rate equivalent to the sample rate doubled and multiplied by the number of divisions; a despread code generation section for generating and outputting in-phase and quadrature-phase despread codes respectively identical to the in-phase and quadrature-phase spread codes in units of chips; an in-phase correlation operation section comprising a plurality of multipliers and adders for performing a product-sum operation between the divided data output from the data storage section and the in-phase despread code output from the despread code generation section in a time-sharing manner at a rate equivalent to the sample rate doubled and multiplied by the number of divisions and for outputting a correlation operation result; a quadrature-phase correlation operation section comprising a plurality of multipliers and adders for performing a product-sum operation between the divided data output from the data storage section and the quadrature-phase despread code output from the despread code generation section in a time-sharing manner at a rate equivalent to the sample rate doubled and multiplied by the number of divisions and for outputting a correlation operation result; a data restoration section synthesizing correlation operation results of divided data originating from the same reception data out of correlation operation results of divided data output from the in-phase correlation operation section and the quadrature-phase correlation operation section and for outputting a synthesis result as a correlation operation of reception data; and a complex operation section for performing a complex operation based on a correlation operation result of the reception data output from the data restoration section and for generating correlation output for in-phase and quadrature-phase reception data at every sample timing.

The present invention can further reduce the circuit scale of a matched filter for performing a correlation operation of complex-modulated in-phase and quadrature-phase reception data by embodying a matched filter comprising: a data division section for dividing in-phase and quadrature-phase reception data into a plurality of data entities, wherein the reception data is obtained by converting an analog signal for the in-phase and the quadrature-phase spread-spectrum modulated by in-phase and quadrature-phase spread codes into a digital form at a specified sample rate, and for outputting the plurality of data entities as divided data in a time-sharing manner at a rate equivalent to the sample rate doubled and multiplied by the number of divisions; a data storage section for storing the divided data output from the data division section and outputting the stored divided data for each chip in a time-sharing manner at a rate equivalent to the sample rate doubled and multiplied by the number of divisions; a despread code generation section for generating and outputting in-phase and quadrature-phase despread codes respectively identical to the in-phase and quadrature-phase spread codes in units of chips; a correlation operation section comprising a plurality of multipliers and adders for performing a product-sum operation between the divided data output from the data storage section and despread codes for the in-phase and the quadrature-phase output from the despread code generation section in a time-sharing manner at a rate equivalent to the sample rate doubled and multiplied by the number of divisions and for outputting a correlation operation result; a data restoration section for synthesizing results of a correlation operation at the rate using the same source reception data and a despread code for the same phase output of correlation operation results of divided data output from the correlation operation section and for outputting a synthesis result as a correlation operation result of the reception data; and a complex operation section for performing a complex operation based on a correlation operation result of the reception data output from the data restoration section and for generating correlation output for in-phase and quadrature-phase reception data at every sample timing.

With respect to the matched filter according to the present invention, it is preferable to divide reception data into high-order and low-order bits in units of bits.

A CDMA communication receiver according to the present invention is characterized by using the aforementioned matched filter and demodulating spread spectrum modulated in-phase and quadrature-phase analog signals based on in-phase and quadrature-phase correlation outputs at every sample timing obtained. It is possible to reduce a circuit scale of the CDMA communication receiver.

BRIEF DESCRIPTION OF THE DRAWING

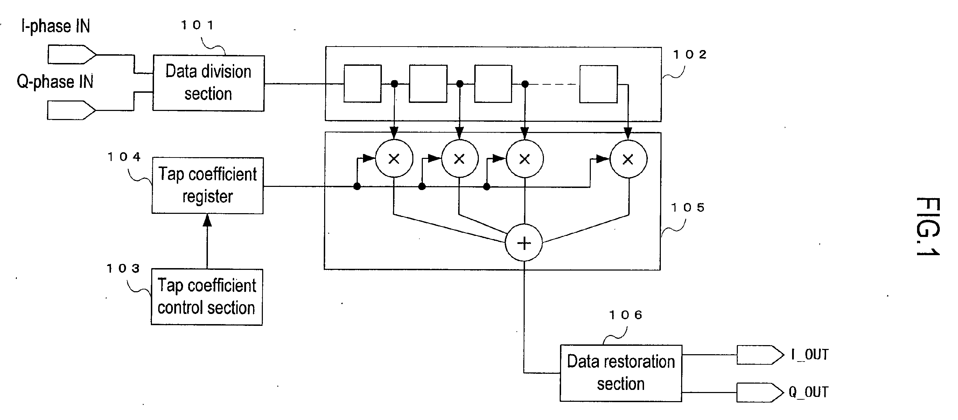

FIG. 1 is a block diagram of a matched filter according to a first embodiment of the present invention.

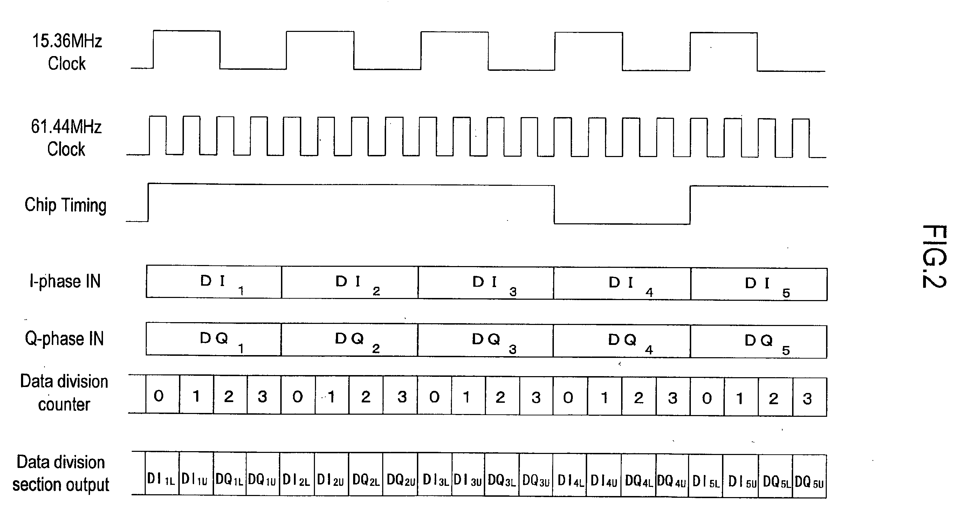

FIG. 2 is a timing chart of each data input or generated from a data division section in the matched filter according to the first embodiment of the present invention.

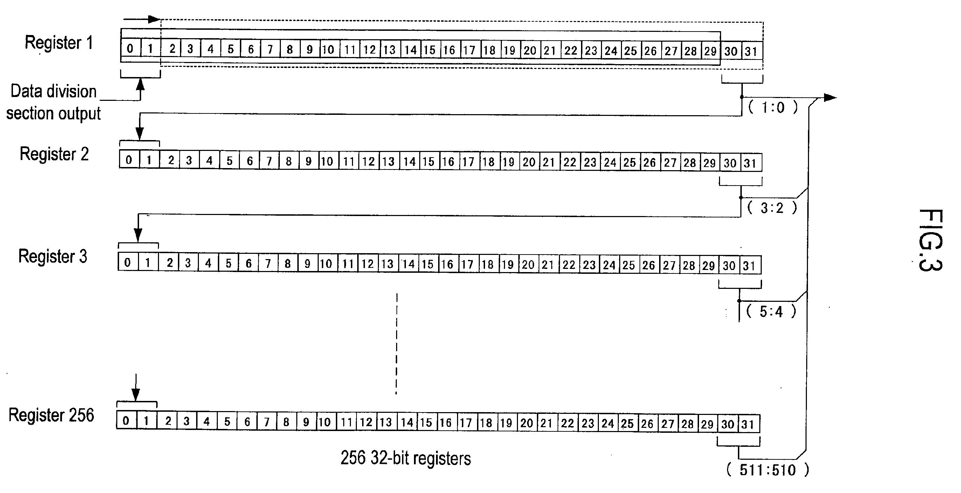

FIG. 3 shows transition of divided bit data input to a data register in the matched filter according to the first embodiment of the present invention.

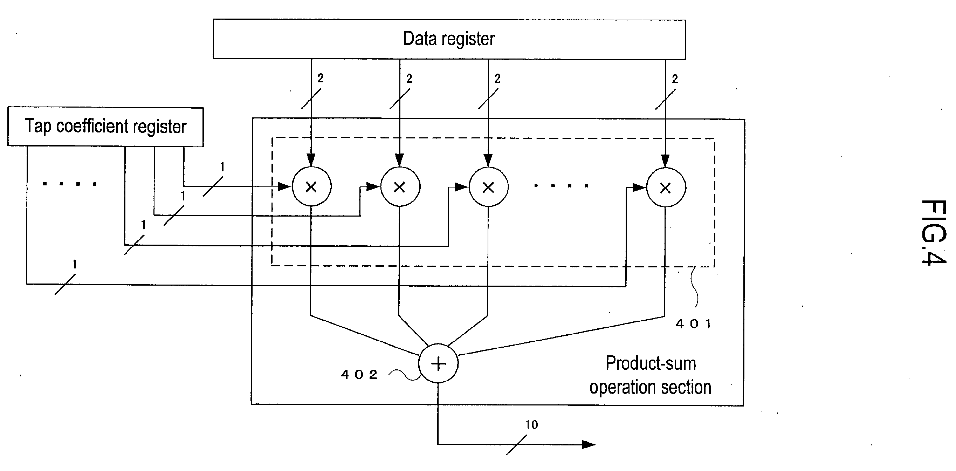

FIG. 4 is a block diagram of a product-sum operation section in the matched filter according to the first embodiment of the present invention.

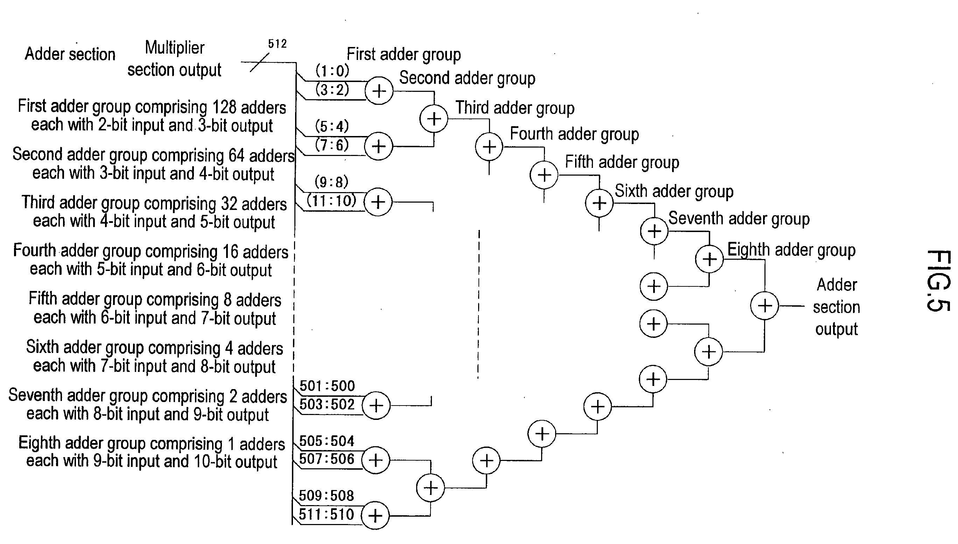

FIG. 5 is a block diagram of an address section in the product-sum operation section in the matched filter according to the first embodiment of the present invention.

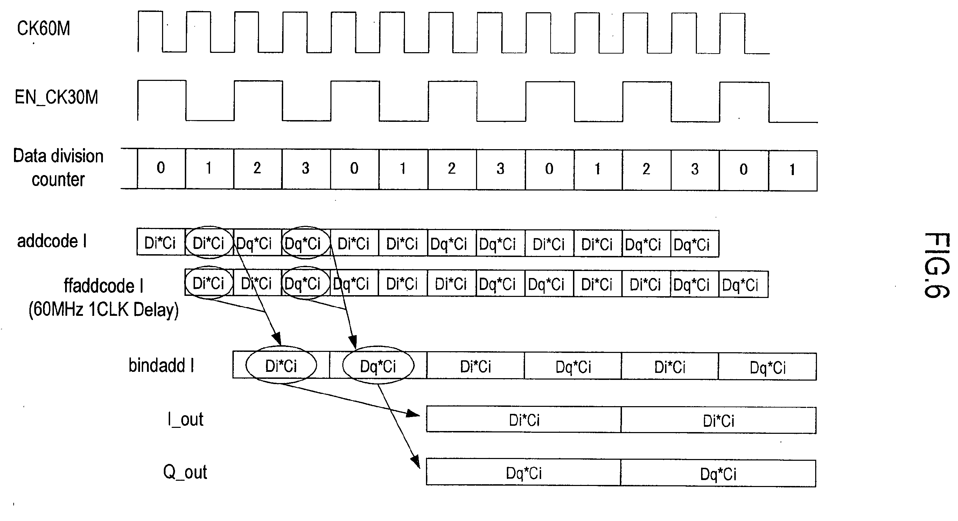

FIG. 6 is a timing chart for restoration in a data restoration section in the matched filter according to the first embodiment of the present invention.

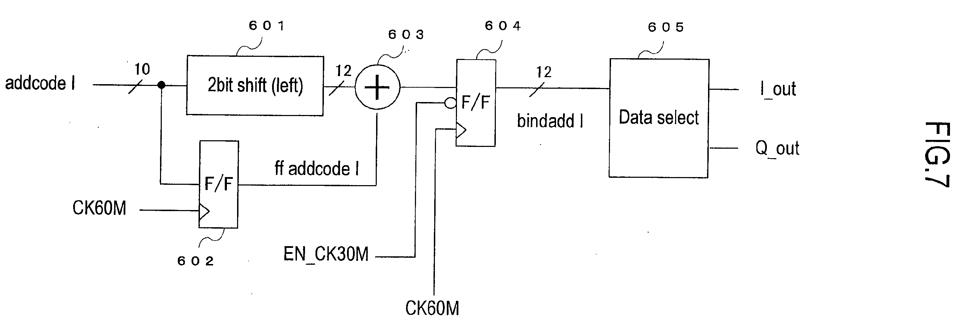

FIG. 7 is a block diagram of the data restoration section in the matched filter according to the first embodiment of the present invention.

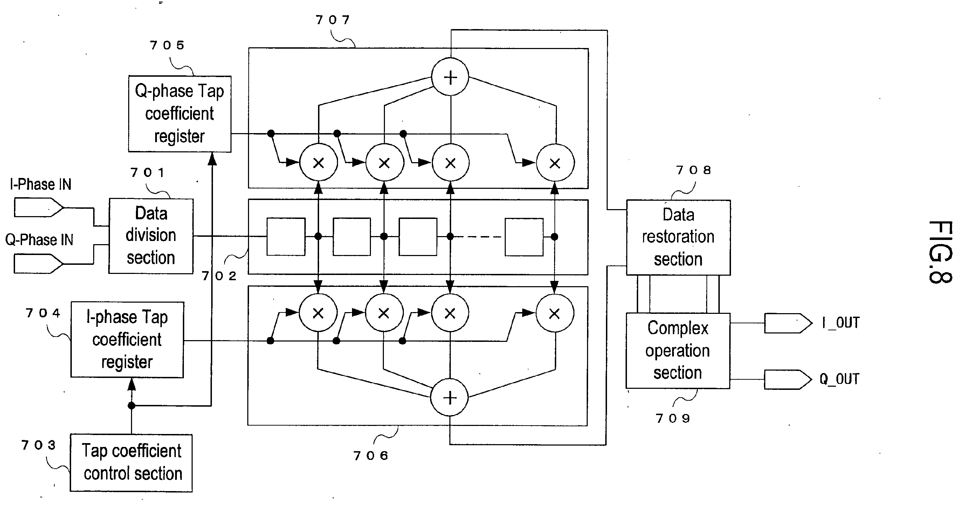

FIG. 8 is a block diagram of a matched filter according to a second embodiment of the present invention.

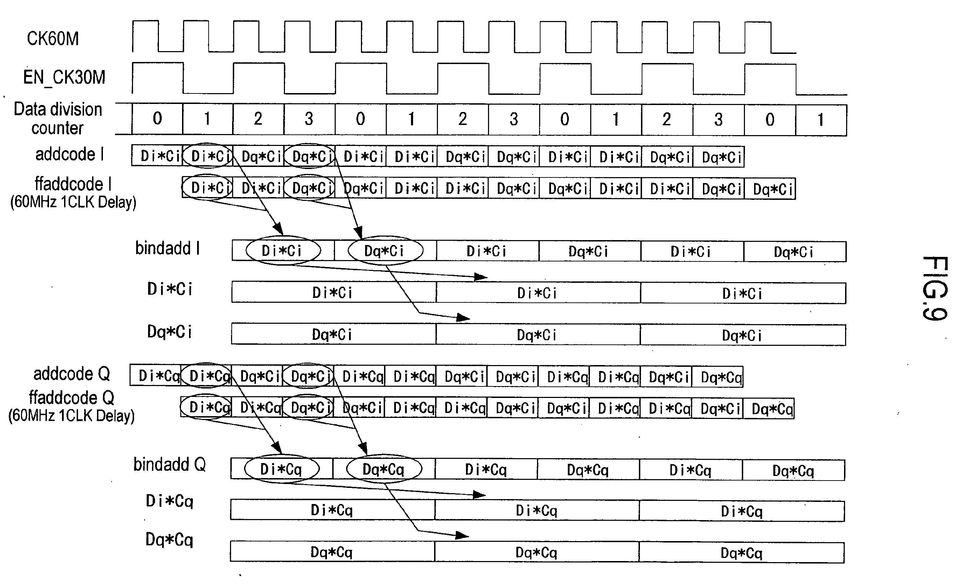

FIG. 9 is a timing chart for restoration in a data restoration section in the matched filter according to the second embodiment of the present invention.

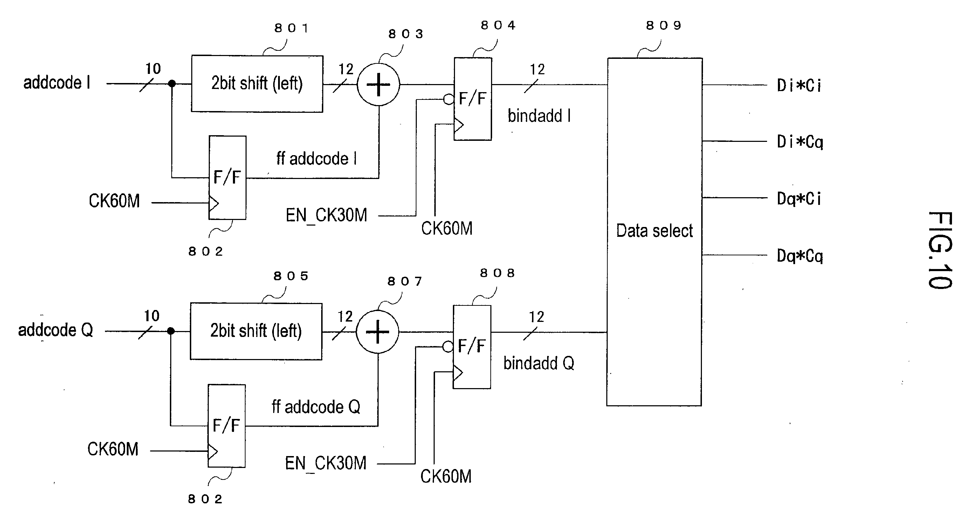

FIG. 10 is a block diagram of the data restoration section in the matched filter according to the second embodiment of the present invention.

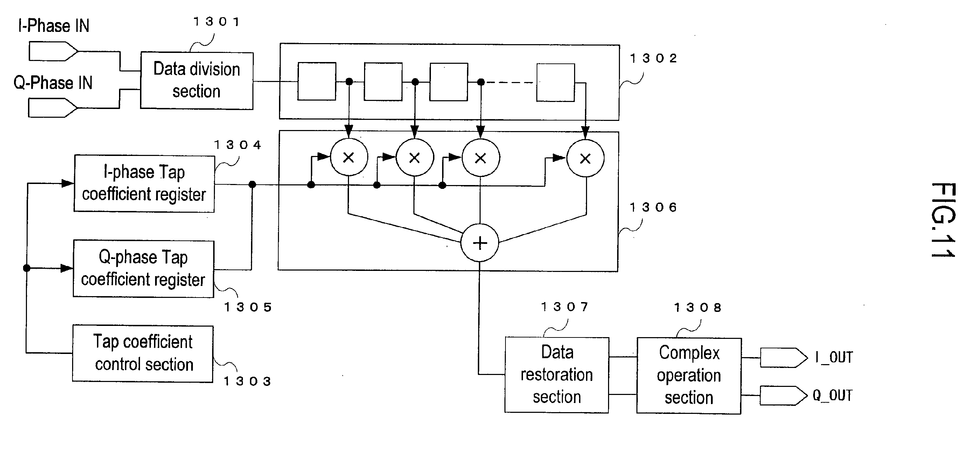

FIG. 11 is a block diagram for another example of the matched filter according to the second embodiment of the present invention.
FIG. 12 is a block diagram of a conventional matched filter.
FIG. 13 is a timing chart for reception data and a despread code.
FIG. 14 shows transition of reception data input to a data register in the conventional matched filter.

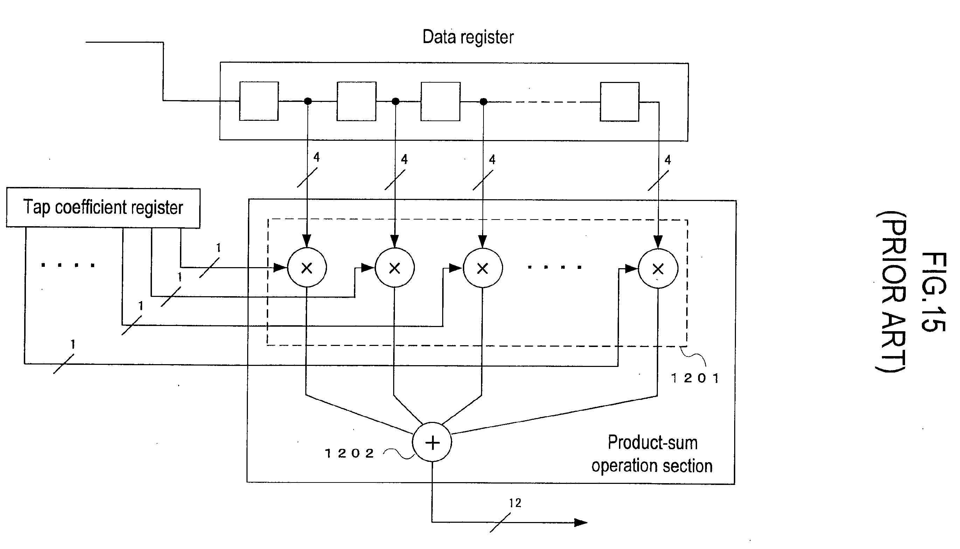

FIG. 15 is a block diagram of a product-sum operation section in the conventional matched filter.

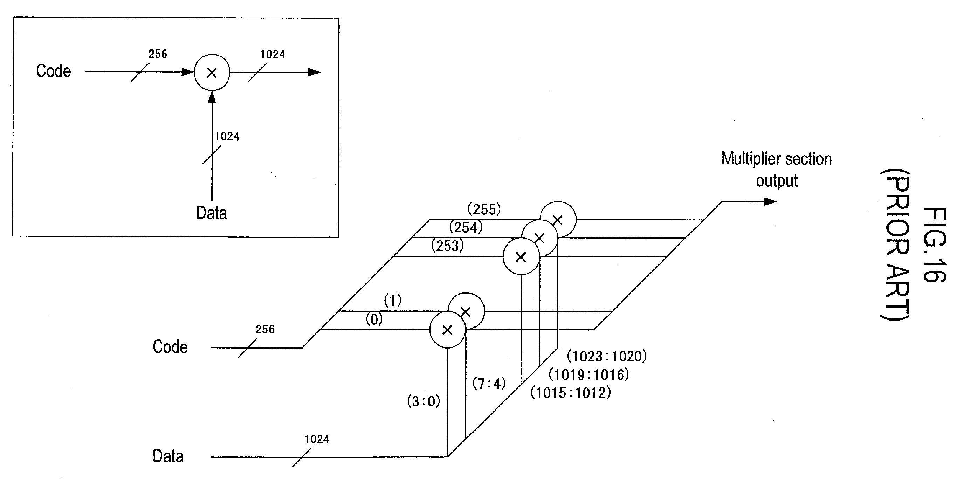

FIG. 16 is a block diagram of a multiplier section in the product-sum operation section in the conventional matched filter.
FIG. 17 is a block diagram of an adder section in the product-sum operation section in the conventional matched filter.

<Description of Reference Numerals>

101, 701, 1301 -- data division section
102, 702, 1302 -- Data register
103, 703, 903, 1303 -- Tap coefficient control section
104 -- Tap coefficient register
105, 706, 707, 906, 907, 908, 909, 1306 -- Product-sum operation section
106, 708, 1307 -- Data restoration section
401, 1201 -- Multiplier section
402, 1202 -- Adder section
601, 801, 805 -- Data shift apparatus

602, 604, 802, 804, 806, 808 -- F/F
603, 803, 807 -- Adder
605, 809 -- Data selector section
704, 904, 1304 -- I-phase Tap coefficient register
705, 905, 1305 -- Q-phase Tap coefficient register
709, 910, 1308 -- Complex operation section

DESCRIPTION OF THE PREFERRED
EMBODIMENTS

Embodiments of the present invention will be described in further detail with reference to the accompanying drawings.

The digital filter according to this embodiment of the present invention converts a spread spectrum modulated analog signal comprising in-phase and quadrature-phase into a digital form at a specified sample rate. The digital filter divides the digital reception data comprising in-phase and quadrature-phase into a plurality of data units on a bit basis. The digital filter performs a product-sum operation between the divided reception data for each phase and a despread code according to time sharing at a doubled sample rate and then at a rate multiplied by the number of divisions. The digital filter synthesizes divided results obtained from the product-sum operation and outputs a product-sum operation result for each phase at the sample timing. This can decrease the number of bits in reception data handled by the product-sum operation. Accordingly, it is possible to reduce the circuit scale for a section needed for the product-sum operation and thus reduce the entire circuit scale of the digital filter.

The following describes a configuration and operations of digital filter according to the present invention by using a matched filter as an example.

The configuration of the matched filter according to a first embodiment of the present invention will be described with reference to FIGS. 1, 4, and 5. FIG. 1 is a block diagram of a matched filter according to a first embodiment (hereafter referred to as embodiment 1) of the present invention. The matched filter in FIG. 1 receives an in-phase and quadrature-phase analog modulation signal modulated by a single spread code, converts this signal into a digital form, performs a correlation operation for each phase, and generates a correlation output as an operation result.

When an analog modulation signal is transmitted as 4-bit data at a chip rate of 3.84 Mbps, the matched filter in FIG. 1 performs digital conversion and correlation output at a quadrupled sample rate, namely 15.36 MHz.

FIG. 4 is a block diagram of a product-sum operation section in the matched filter according to embodiment 1 of the present invention. FIG. 5 is a block diagram of an address section in the product-sum operation section.

The matched filter according to embodiment 1 of the present invention comprises a data division section 101, a data register 102, a Tap coefficient control section 103, a Tap coefficient register 104, a product-sum operation section 105, and a data restoration section 106. The product-sum operation section 105 comprises a multiplier section 401 and an adder section 402.

The data division section 101 divides 4-bit I-phase and Q-phase digital reception data converted by an A/D converter (not shown) into two high-order bits and two low-order bits. The section alternatively outputs each reception data divided at a 61.44 MHz rate to the data register 102 in a time-sharing manner. The data division section 101 determines reception data to be divided based on a counter value generated from a data division counter (not shown).

The data register 102 is provided with 256 32-bit registers. Each register stores I-phase and Q-phase reception data equivalent to one chip. The entire data register 102 can store reception data equivalent to one symbol. The data register 102 outputs reception data in units of two bits from each register at to the product-sum operation section 105 61.44 MHz.

The Tap coefficient control section 103 generates the same despread code as a spread code used for modulation of an analog modulation signal in units of one chip, namely one bit at 3.84 MHz. The generated code is output to a specified address in the Tap coefficient register 104.

Having a 256-bit register, the Tap coefficient register 104 stores despread codes for 256 chips, namely one symbol, generated from the Tap coefficient control section 103 and outputs that code to the product-sum operation section 105 at 15.36 MHz.

The matched filter according to embodiment 1 of the present invention may replace the Tap coefficient control section 103 and the Tap coefficient register 104 with an apparatus which previously stores a plurality of types of despread codes equivalent to one symbol and outputs these codes to the product-sum operation section 105.

The product-sum operation section 105 performs a correlation operation by multiplying reception data output from the data register 102 by a despread code output from the Tap coefficient register 104 and adding a multiplication result. It is to be noted that the reception data contains each phase divided for each chip. Corresponding to the reception data containing each phase divided at every sample timing, the product-sum operation section 105 issues a correlation output to the data restoration section 106.

As shown in FIG. 4, the product-sum operation section 105 comprises a multiplier section 401 and an adder section 402. The multiplier section 401 is provided with 256 multipliers for multiplying 2 bits by 1 bit. Each multiplier performs multiplication between reception data divided for each chip and a despread code. Multiplication results from respective multipliers are unified and are output as 512-bit data to the adder section 402.

As shown in FIG. 5, the adder section 402 is configured to compute a sum of multiplication results by hierarchically arranging adders. The 512-bit data output from the multiplier section 401 is divided into 2 bits each and is input to the first adder group. The first adder group comprises 128 adders for adding 2-bit input data and outputting 3-bit data. Each adder adds a multiplication result of two adjacent chip timings and outputs an addition result to the second adder group.

The second adder group comprises 64 adders for adding 3-bit input data and outputting 4-bit data and adds addition results to each other output from two adders in the first adjacent adder group. Subsequently, the adder section 402 comprises a plurality of adder groups having the similar configuration. The last (eighth) adder computes a sum of all multiplication results, namely correlation output. The last adder comprises one adder which performs an addition using 9-bit input data and outputs a result as 10-bit data.

In the matched filter according to embodiment 1 of the present invention, each multiplier in the multiplier section 401 and each adder in the adder section 402 also operate at 61.44 MHz.

The data restoration section 106 synthesizes correlation output for the reception data from the product-sum operation section 105 and outputs that data as correlation output. The correlation output corresponds to reception data with each phase divided for the sample timing. The data restoration section 106 synthesizes correlation outputs for the reception data divided at 30.72 MHz.

The following describes operations of the matched filter according to embodiment 1 of the present invention with respect to FIGS.1 to 7.

A receiver's antenna (not shown) receives a 4-bit analog modulation signal. An A/D converter (not shown) converts this signal into a digital form at a quadrupled sample rate, namely 15.36 MHz, for each I-phase and Q-phase. The converted digital reception data is output to the data division section 101.

The data division section 101 divides the input reception data for each phase into data comprising a plurality of bits (hereafter referred to as divided bit data). Specifically, 4-bit reception data is divided into two high-order bits (hereafter referred to as high-order bit data) and two low-order bits (hereafter referred to as low-order bit data).

FIG. 2 is a timing chart of each data input or generated from the data division section 101. The I-phase and Q-phase reception data correspond to I-phase IN and Q-phase IN in FIG. 2, respectively. In this figure, the I-phase and Q-phase reception data is output at a quadrupled sample rate. Accordingly, the same value is used for DI1 to DI4 and DQ1 to DQ4.

Further, the data division section 101 is supplied with a counter value for 2-bit data generated from the data division counter and determines bit data to be divided for output based on this counter value. The data division counter repeatedly outputs values 0 to 3 at 61.44 MHz as a counter value (data division counter in FIG. 2). The data division section 101 references the input counter value and determines bit data to be divided for output corresponding to the input reception data.

For example, suppose that the input I-phase and Q-phase reception data correspond to DI1 and DQ1, respectively. When the counter value is 0, the data division section 101 outputs low-order bit data $DI_{1L}$ of the I-phase reception data. When the counter value is 1, the data division section 101 outputs high-order bit data $DI_{1U}$ of the I-phase reception data. When the counter value is 2, the data division section 101 outputs low-order bit data $DQ_{1L}$ of the Q-phase reception data. When the counter value is 3, the data division section 101 outputs high-order bit data $DQ_{1U}$ of the Q-phase reception data.

Likewise, the data division section 101 performs this operation for the subsequently input reception data and outputs divided bit data at 61.44 MHz.

In the present invention, the data division section 101 may output divided bit data in an order other than that mentioned above.

The divided bit data for each phase is output from the data division section 101 and is input to the data register 102. FIG. 3 shows transition of divided bit data in the data register 102.

When input to the data register 102, the divided bit data is stored at an address of bits 0 and 1 in register 1. When new divided bit data is stored in register 1, the divided bit data already stored in register 1 is shifted two bits to an address to the right in the figure. Namely, the divided bit data stored at the address of bits 0 and 1 is stored at an address of bits 2 and 3. The other divided bit data stored at succeeding addresses are sequentially shifted two bits to the right.

When new divided bit data is stored in register 1, the divided bit data stored at bits 30 and 31 in register 1 is shifted to bits 0 and 1 of the next register 2 and is output to the product-sum operation section 105. Similar operations are performed for the other registers to shift the divided bit data and output data to the product-sum operation section 105. Divided bit data output from each register is unified and is output to the product-sum operation section 105 as 512-bit data (2*256).

In the matched filter according to embodiment 1 of the present invention, divided bit data output from each register in the data register 102 is output in the order depicted in the timing chart of FIG. 2.

Each register of the data register 102 can store 32-bit data, namely I-phase and Q-phase reception data for one chip. Data is delayed by sequentially shifting the divided bit data. Divided bit data is sequentially output at the sample rate multiplied by the number of phases multiplied by the number of divisions, namely at the quadrupled rate. When divided bit data stored at the last two bits of each register is output at a rate four times faster than the sample rate, I-phase and Q-phase reception data for one symbol is output after a lapse of the sample timing.

The Tap coefficient control section 103 generates a despread code identical to the spread code used for modulation of an analog modulation signal. The code is generated for each phase corresponding to one chip, namely in units of one bit at 3.84 MHz and is output to a specified address in the Tap coefficient register 104.

The Tap coefficient register 104 comprises a 256-bit register. When a despread code is generated and output from the Tap coefficient control section 103, the Tap coefficient register 104 sequentially stores this code at a specified address in units of one bit. The despread code stored in the Tap coefficient register 104 is output to the product-sum operation section 105 at 15.36 MHz.

After outputting despread codes for 256 chips, the Tap coefficient control section 103 issues a control instruction to the Tap coefficient register 104 for resetting the stored despread code. The Tap coefficient control section 103 repeatedly performs the aforementioned operations at every symbol timing.

Divided bit data is output from the data register 102 for each chip and phase. A despread code is output from the Tap coefficient register 104. The divided bit data and the despread code are input to the product-sum operation section 105 for performing a multiplication and computing a sum of multiplication results. A correlation output for divided bit data at every sample timing is output to the data restoration section 106 according to each phase. The product-sum operation section 105 generates the aforementioned correlation output at 61.44 MHz.

Correlation output for the divided bit data is synthesized in the data restoration section 106 and is restored to the original reception data. FIG. 6 is a timing chart for a restoration operation in the data restoration section 106. FIG. 7 is a block diagram of the data restoration section 106. The following describes in detail the configuration and operations of the data restoration section 106 with reference to FIGS. 6 and 7. The data division counter in the timing chart of FIG. 6 is the same as the data division counter in the timing chart of FIG. 2.

The data restoration section 106 comprises a data shift apparatus (2bit shift(left) in FIG. 7) 601, an F/F (Flip Flop) 602, an adder 603, an F/F 604, and a data selector section (Data Select in FIG. 7) 605.

The data shift apparatus 601 shifts data input to the data restoration section 106 for two bits to the left and outputs data larger than the input data for two bits.

The F/F 602 outputs the input data to the adder 603 with a one-clock delay.

The adder 603 synthesizes correlation outputs for the divided bit data by adding data output from the data shift apparatus 601 and the F/F 602 and outputs a synthesis result to the F/F 604.

The F/F 604 stores correlation output for the reception data from the adder 603. Based on an enable signal output from the data division counter, the F/F 604 issues the stored correlation output for the reception data to the data selector section 605.

The data selector section 605 inputs the correlation output from the F/F 604 for the reception data and generates an output for each phase.

A correlation output (addcode I in FIG. 7) for 10-bit divided bit data is input to the data restoration section 106. The 10-bit data is converted to 12-bit data by shifting two bits to the left in the data shift apparatus 601 and is output to the adder 603. The correlation output for the divided bit data is also input to the F/F 602 and is output to the adder 603 as one-clock delayed data (ffaddcode I in FIG. 7) based on a clock frequency of 61.44 MHz (CK60M in FIG. 7). The adder 603 adds correlation outputs to each other generated from the data shift apparatus 601 and the F/F 602 at the same clock timing and outputs an addition result to the F/F 604.

A shift operation by the data shift apparatus 601 is just to match bits in the high-order bit data and the low-order bit data. By providing the data shift apparatus 601, the F/F 602, and the adder 603, it is possible to restore original reception data from the high-order bit data and the low-order bit data.

In addition to the 61.44 MHz clock frequency, a 30.72 MHz enable signal (EN_CK30M in FIG. 7) is input from the data division counter which outputs a counter value to the data division section 101. When the enable signal is input, the F/F 604 outputs the stored addition result to the data selector section 605.

As mentioned above, the data division section 101 outputs the reception data for each phase to the data register 102 by dividing that data into two high-order bits and two low-order bits in this sequence based on a count value generated from the data division counter. This sequence is also maintained in correlation outputs for the divided bit data generated from the product-sum operation section 105. When the counter value is 1, the I-phase reception data is completely obtained at given sample timing. When the counter value is 3, the Q-phase reception data is completely obtained at given sample timing.

As shown in the timing chart of FIG. 6, an enable signal input to the F/F 604 synchronously occurs when the counter values are equivalent to 2 and 4. This allows the F/F 604 to accurately output the restored I-phase and Q-phase reception data (bindadd I in FIG. 6) out of addition results generated from the adder 603 at 61.44 MHz. In the timing chart of FIG. 6, addcode I and ffaddcode I contain addition results marked with circles. These results are output from the F/F 604 as bindadd I.

The restored reception data is output from the F/F 604 at 30.72 MHz. The data selector section 605 generates correlation outputs for this reception data according to phases. As shown in the timing chart of FIG. 6, the data selector section 605 simultaneously generates correlation outputs for the I-phase and Q-phase reception data of the same sample timing at 15.36 MHz. According to the aforementioned operations, the data restoration section 106 generates correlation outputs for the I-phase and Q-phase reception data at every sample timing.

The matched filter according to embodiment 1 of the present invention may change the configuration of the data shift apparatus 601 and the F/F 602 based on a sequence of outputting divided bit data. Likewise, it may be preferable to change the timing for generating an enable signal from the data division counter.

In the matched filter according to embodiment 1 of the present invention, the data division section 101 outputs reception data for each phase to the data register 102 according to time-sharing by dividing the reception data into high-order bit data and low-order bit data. For this purpose, the product-sum operation section 105 is hierarchically structured. Namely, the multiplier section 401 uses 256 2-bit multipliers. The adder section 402 uses 128 first adders each with 2-bit input and 3-bit output and the last one adder with 9-bit input and 10-bit output.

Compared to a product-sum operation section in the conventional matched filter, the product-sum operation section according to this embodiment uses the same configurations for multipliers and adders and the same total number of multipliers and adders. Since the number of operation bits is decreased for each multiplier and adder, it is possible to reduce the circuit scale for the product-sum operation section.

The matched filter according to embodiment 1 of the present invention divides I-phase and Q-phase reception data into high-order bit data and low-order bit data, respectively. The matched filter performs a correlation operation by outputting the divided data to the product-sum operation section in a time-sharing manner. Because of this, it is possible to reduce the circuit scale of the product-sum operation section which occupies a large part of the matched filter, providing an effect of greatly reducing the entire circuit scale of the matched filter.

The following mainly describes differences between a matched filter according to a second embodiment of the present invention and the matched filter according to embodiment 1 with respect to configurations and operations thereof by using FIGS. 8 to 10. FIG. 8 is a block diagram of a matched filter according to the second embodiment (hereafter referred to as embodiment 2) of the present invention. Like the matched filter in FIG. 12, the matched filter in FIG. 8 receives a complex modulated analog modulation signal comprising the in-phase and the quadrature-phase. After converting this signal into a digital form, the matched filter performs a correlation operation for each phase and generates an operation result as correlation output.

An analog modulation signal is 4-bit data transmitted at a chip rate of 3.84 Mbps. Like embodiment 1, the matched filter in FIG. 8 performs digital conversion and correlation output for this signal at a quadrupled sample rate, namely at 15.36 MHz.

A receiver's antenna (not shown) receives a 4-bit analog modulation signal. An A/D converter (not shown) converts this signal into a digital form at 15.36 MHz, namely at a quadrupled sample rate, for each I-phase and Q-phase. The converted digital reception data is output to a data division section 701. Like the data division section 101 in the matched filter according to embodiment 1, the data division section 701 divides reception data corresponding to each phase into high-order bit data and low-order bit data and outputs the data to a data register 702 in a time-sharing manner.

The data division section 701 uses the same output sequence of divided bit data as for the matched filter according to embodiment 1 as shown in the timing chart of FIG. 2.

Like the data register 102 according to embodiment 1, the data register 702 comprises 256 32-bit registers. Each register outputs divided bit data to product-sum operation sections 706 and 707 at 61.44 MHz. Transition of divided bit data in the data register 702 complies with FIG. 3.

The matched filter according to embodiment 2 of the present invention generates correlation outputs for the I-phase and the Q-phase from a complex modulated analog modulation signal. For this reason, a correlation operation requires despread codes for the I-phase and the Q-phase. Accordingly, a Tap coefficient control section 703 generates despread codes for the I-phase and the Q-phase in units of one bit for each phase at the chip rate. The Tap coefficient control section 703 outputs the generated codes to specified addresses of an I-phase Tap coefficient register 704 and a Q-phase Tap coefficient register 705.

The I-phase Tap coefficient register 704 and the Q-phase Tap coefficient register 705 are 256-bit registers and output stored despread codes to the product-sum operation sections 706 and 707 at 15.72 MHz. After outputting despread codes for 256 chips, the Tap coefficient control section 703 issues a control instruction to the I-phase Tap coefficient register 704 and the Q-phase Tap coefficient register 705 for resetting the stored despread codes. The Tap coefficient control section 703 repeatedly performs the aforementioned operations at every symbol timing.

The product-sum operation section 706 performs a correlation operation between divided bit data stored in the data register 702 and an I-phase despread code stored in the I-phase Tap coefficient register 704. The product-sum operation section 707 performs a correlation operation between divided bit data and a Q-phase despread code stored in the Q-phase Tap coefficient register 705. These sections issue a correlation output for the divided bit data equivalent to one symbol to the data restoration section 708 at 61.44 MHz. The configuration and operations of the product-sum operation sections 706 and 707 are the same as for the product-sum operation section 105 according to embodiment 1.

According to the symbols used for the description of the prior art, the product-sum operation section 706 generates a correlation output for $D_I{}^*C_I$ and $D_Q{}^*C_I$ in units of divided bit data. The product-sum operation section 707 generates a correlation output for $D_I{}^*C_Q$ and $D_Q{}^*C_Q$ in units of divided bit data.

When the product-sum operation sections 706 and 707 generate correlation output for the divided bit data, the data restoration section 708 synthesizes the correlation output to restore the correlation output of the reception data. FIG. 9 is a timing chart for a restoration operation in the data restoration section 708. FIG. 10 is a block diagram of the data restoration section 708.

In the configuration block diagram of FIG. 10, an upper circuit group synthesizes correlation output for the divided bit data generated from the product-sum operation section 706. A lower circuit group synthesizes correlation output for the divided bit data generated from the product-sum operation section 707. Synthesis results are output to a data selector section (DataSelect in FIG. 10) 809. The configuration and operations of each circuit group are the same as those for the corresponding portions in the configuration block diagram of the data restoration section 106 in FIG. 7 according to embodiment 1.

As shown in FIG. 9, correlation outputs of $D_I{}^*C_I$ and $D_Q{}^*C_I$ are restored from an F/F 804. Correlation outputs of $D_I{}^*C_Q$ and $D_Q{}^*C_Q$ are restored from an F/F 808. These outputs are alternately issued to a data selector section 809 at 30.72 MHz. The data selector section 809 outputs four types of correlation results output from the F/Fs 804 and 808 to a complex operation section 709 at 15.36 MHz.

The complex operation section 709 performs a complex operation for four types of correlation outputs supplied and demodulates the correlation output waveform for the I-phase and the Q-phase. The complex operation section 709 is the same as the conventional complex operation section 910 as regards the configuration using two adders for implementing the equations (1) and (2) explained for the prior art. Owing to the aforementioned configuration and operations, the matched filter according to embodiment 2 of the present invention can provide correlation outputs according to the phases at every sample timing.

The following describes another example of the matched filter according to embodiment 2 of the present invention with reference to FIG. 11. FIG. 11 is a block diagram for another example of the matched filter according to the second embodiment of the present invention. Unless otherwise explained, the configurations and operations of the portions constituting the matched filter in FIG. 11 are the same as those for the corresponding portions of the matched filter in FIG. 8.

Like in FIG. 8, the matched filter in FIG. 11 receives a complex modulated analog modulation signal comprising the in-phase and the quadrature-phase. After converting this signal into a digital form, the matched filter performs a correlation operation for each phase and generates an operation result as correlation output. However, the matched filter in FIG. 11 uses a single product-sum operation section 1306 which alternately performs a correlation operation for the I-phase and Q-phase reception data.

According to the timing chart in FIG. 2, the matched filter in FIG. 11 uses the data division section 701 to output divided bit data of the reception data for each phase, The output data is stored in a data register 1302 and is further output to the product-sum operation section 1306. Transition of divided bit data in the data register 1302 complies with FIG. 3. The data register 1302 outputs divided bit data to the product-sum operation section 1306 at 61.44 MHz.

The product-sum operation section 1306 performs a correlation operation between divided bit data for each input phase and despread codes for the I-phase and the Q-phase in a time-sharing manner. In FIG. 11, the Tap coefficient control section 1303 generates despread codes for the I-phase and the Q-phase in units of one bit for each phase at the chip rate. The Tap coefficient control section 1303 outputs the generated codes to specified addresses of an I-phase Tap coefficient register 1304 and a Q-phase Tap coefficient register 1305. The I-phase Tap coefficient register 1304 and the Q-phase Tap coefficient register 1305 each output the stored despread codes to the product-sum operation section 1306 alternately bit by bit based on a control signal output from the Tap coefficient control section 1303. The product-sum operation section 1306 performs a correlation operation between the divided bit data and the spread code at 122.88 MHz.

By performing output control of spread codes as mentioned above, the product-sum operation section 1306 performs a correlation operation between the divided bit data for each phase and the corresponding spread code for each phase without exception.

When the product-sum operation section 1306 generates correlation output for the divided bit data, the data restoration section 1307 synthesizes the correlation output to restore the correlation output of the reception data. The I-phase or Q-phase spread code is used to perform a correlation operation between correlation outputs for the divided bit data. The correlation outputs are obtained alternately at 122.88 MHz. For this purpose, the data restoration section 1307 temporarily stores a correlation output for one of input divided bit data. The spread code for the same phase is used to perform a correlation operation for the other divided bit data. When a correlation output for the other divided bit data is input, the data restoration section 1307 synthesizes both divided bit data.

According to the aforementioned processing, the data restoration section 1307 can restore four types of correlation results during a one-symbol time.

The data restoration section 1307 is preferably configured to include any of the circuit groups in the configuration block diagram of FIG. 10. In addition, it is desirable to store correlation outputs for divided bit data in portions corresponding to the data shift apparatus 801 or 805 and the F/F 802 or 806. The data restoration section 1307 performs the aforementioned sequence of processing at 122.88 MHz, including the synthesis, output to the data selector section, and output from the data selector section to the complex operation section 1308.

The complex operation section 1308 demodulates correlation output for the reception data restored in the data restoration section 1307, thus demodulating correlation output waveforms for the I-phase and the Q-phase.

In addition to the effect of reducing the circuit scale of the product-sum operation section, the matched filter according to embodiment 2 can decrease the number of product-sum operation sections compared to the conventional complex correlation matched filter. This is because divided reception data is output to the product-sum operation section in a time-sharing manner for each phase on a bit basis at a rate four times faster than the sample rate. The configuration of each product-sum operation section is the same as the product-sum operation section according to embodiment 1. Therefore, it is possible to further reduce the circuit scale of the entire matched filter by decreasing the number of product-sum operation sections.

It is possible to moreover reduce the number of product-sum operation sections by performing a correlation operation for each phase on a time-sharing basis, further more reducing the circuit scale of the entire matched filter.

The matched filter according to embodiment 2 of the present invention divides complex modulated reception data in units of bits. The matched filter outputs data to the product-sum operation section for each bit data obtained and each phase in a time-sharing manner at a rate equivalent to the sample rate multiplied by the number of divisions multiplied by the number of phases. There is provided an effect of decreasing the number of product-sum operation sections and further reducing the circuit scale of the entire matched filter.

The product-sum operation section performs a correlation operation between the reception data and a spread code for the in-phase and the quadrature-phase. This correlation operation is performed at a rate twice as fast as the rate equivalent to the sample rate multiplied by the number of divisions multiplied by the number of phases in a time-sharing manner. This provides an effect of further decreasing the number of product-sum operation sections and moreover reducing the circuit scale of the matched filter.

While there have been described specific preferred embodiments of the present invention with respect to the matched filter which handles 4-bit reception data, it is to be distinctly understood that the present invention is also applicable to reception data with other bit lengths. The matched filter according to the present invention is applicable independently of the number of divisions of reception data.

When the matched filter according to the present invention performs a correlation operation by processing 4-bit reception data as four blocks of 1-bit data, it is possible to further reduce the circuit scale of the product-sum operation section. In this case, however, the product-sum operation section needs to perform a correlation operation at a rate eight times as fast as the sample rate.

The matched filter according to the present invention performs time sharing processing services by increasing processing speeds of devices constituting the matched filter. Since the present LSI technology achieves a 100 Mbps processing speed, the matched filter can be embodied in the future without problems.

While there have been described the configurations and operations of the digital filter according to the present invention using the matched filter as an example, the digital filter according to the present invention is not limited to matched filters. The present invention provides the aforementioned effects for other digital filters such as an FIR filter for filtering send/receive signals in a mobile communication system.

The present invention provides an effect of reducing the digital filter circuit scale by embodying a digital filter for filtering output of digital data comprising a plurality of channels, wherein the digital filter divides the digital data into a plurality of data entities for each channel, multiplies an input rate for the digital data by the number of channels, performs a filtering operation according to time sharing by further multiplying the input rate by the number of divisions, synthesizes filtering output results of data divided from the same digital data, and produces filtering output of the digital data for each channel based on a synthesis result.

The present invention provides an effect of reducing the circuit scale of a matched filter for performing a correlation operation of in-phase and quadrature-phase reception data spread-modulated by one type of spread code by embodying a matched filter comprising: a data division section for dividing in-phase and quadrature-phase reception data into a plurality of data entities, wherein the reception data is obtained by converting an analog signal for the in-phase and the quadrature-phase spread-spectrum modulated by one type of spread code into a digital form at a specified sample rate, and for outputting the plurality of data entities as divided data in a time-sharing manner at a rate equivalent to the sample rate doubled and multiplied by the number of divisions; a data storage section for storing the divided data output from the data division section and outputting the stored divided data for each chip in a time-sharing manner at a rate equivalent to the sample rate doubled and multiplied by the number of divisions; a despread code generation section for generating and outputting a despread code identical to the spread code in units of chips; a correlation operation section comprising a plurality of multipliers and adders for performing a product-sum operation between the divided data output from the data storage section and the despread code output from the despread code generation section in a time-sharing manner at a rate equivalent to the sample rate doubled and multiplied by the number of divisions and for outputting a correlation operation result; and a data restoration section for synthesizing correlation operation results of divided data originating from the same reception data out of correlation operation results of divided data output from the correlation operation section and for performing correlation output of the in-phase and quadrature-phase reception data at every sample timing.

The present invention provides an effect of reducing the circuit scale of a matched filter for performing a correlation operation of complex-modulated in-phase and quadrature-phase reception data by embodying a matched filter comprising: a data division section for dividing in-phase and quadrature-phase reception data into a plurality of data entities, wherein the reception data is obtained by converting an analog signal for the in-phase and the quadrature-phase spread-spectrum modulated by in-phase and quadrature-phase spread codes into a digital form at a specified sample rate, and for outputting the plurality of data entities as divided data in a time-sharing manner at a rate equivalent to the sample rate doubled and multiplied by the number of divisions; a data storage section for storing the divided data output from the data division section and outputting the stored divided data for each chip in a time-sharing manner at a rate equivalent to the sample rate doubled and multiplied by the number of divisions; a despread code generation section for generating and outputting in-phase and quadrature-phase despread codes respectively identical to the in-phase and quadrature-phase spread codes in units of chips; an in-phase correlation operation section comprising a plurality of multipliers and adders for performing a product-sum operation between the divided data output from the data storage section and the in-phase despread code output from the despread code generation section in a time-sharing manner at a rate equivalent to the sample rate doubled and multiplied by the number of divisions and for outputting a correlation operation result; a quadrature-phase correlation operation section comprising a plurality of multipliers and adders for performing a product-sum operation between the divided data output from the data storage section and the quadrature-phase despread code output from the despread code generation section in a time-sharing manner at a rate equivalent to the sample rate doubled and multiplied by the number of divisions and for outputting a correlation operation result; a data restoration section synthesizing correlation operation results of divided data originating from the same reception data out of correlation operation results of divided data output from the in-phase correlation operation section and the quadrature-phase correlation operation section and for outputting a synthesis result as a correlation operation of reception data; and a complex operation section for performing a complex operation based on a correlation operation result of the reception data output from the data restoration section and for generating correlation output for in-phase and quadrature-phase reception data at every sample timing.

The present invention provides an effect of further reducing the circuit scale of a matched filter for performing a correlation operation of complex-modulated in-phase and quadrature-phase reception data by embodying a matched filter comprising: a data division section for dividing in-phase and quadrature-phase reception data into a plurality of data entities, wherein the reception data is obtained by converting an analog signal for the in-phase and the quadrature-phase spread-spectrum modulated by in-phase and quadrature-phase spread codes into a digital form at a specified sample rate, and for outputting the plurality of data entities as divided data in a time-sharing manner at a rate equivalent to the sample rate doubled and multiplied by the number of divisions; a data storage section for storing the divided data output from the data division section and outputting the stored divided data for each chip in a time-sharing manner at a rate equivalent to the sample rate doubled and multiplied by the number of divisions; a despread code generation section for generating and outputting in-phase and quadrature-phase despread codes respectively identical to the in-phase and quadrature-phase spread codes in units of chips; a correlation operation section comprising a plurality of multipliers and adders for performing a product-sum operation between the divided data output from the data storage section and despread codes for the in-phase and the quadrature-phase output from the despread code generation section in a time-sharing manner at a rate equivalent to the sample rate doubled and multiplied by the number of divisions and for outputting a correlation operation result; a data restoration section for synthesizing results of a correlation operation at the rate using the same source reception data and a despread code for the same phase output of correlation operation results of divided data output from the correlation operation section and for outputting a synthesis result as a correlation operation result of the reception data; and a complex operation section for performing a complex operation based on a correlation operation result of the reception data output from the data restoration section and for generating correlation output for in-phase and quadrature-phase reception data at every sample timing.

It is possible to reduce the circuit scale of a CDMA communication receiver by using the matched filter according to the present invention and embodying a CDMA communication receiver characterized by demodulating a spread spectrum modulated analog single for the in-phase and the quadrature-phase based on correlation output for the in-phase and the quadrature-phase at obtained sample timing.

## Claims

1. A digital filter for filtering output of digital data comprising a plurality of channels, wherein
said digital filter divides said digital data into a plurality of data entities for each channel, multiplies an input rate for the said digital data by the number of channels, performs a filtering operation according to time sharing by further multiplying the input rate by the number of divisions, synthesizes filtering output results of data divided from the same digital data, and produces filtering output of said digital data for each channel based on a synthesis result.

2. A matched filter comprising:

a data division section for dividing in-phase and quadrature-phase reception data into a plurality of data entities, wherein said reception data is obtained by converting an analog signal for the in-phase and the quadrature-phase spread-spectrum modulated by one type of spread code into a digital form at a specified sample rate, and for outputting said plurality of data entities as divided data in a time-sharing manner at a rate equivalent to said sample rate doubled and multiplied by the number of divisions;
a data storage section for storing said divided data output from said data division section and outputting said stored divided data for each chip in a time-sharing manner at a rate equivalent to said sample rate doubled and multiplied by the number of divisions;
a despread code generation section for generating and outputting a despread code identical to said spread code in units of chips;
a correlation operation section comprising a plurality of multipliers and adders for performing a product-sum operation between said divided data output from said data storage section and said despread code output from said despread code generation section in a time-sharing manner at a rate equivalent to said sample rate doubled and multiplied by the number of divisions and for outputting a correlation operation result; and
a data restoration section for synthesizing correlation operation results of divided data originating from the same reception data out of correlation operation results of divided data output from said correlation operation section and for performing correlation output of said in-phase and quadrature-phase reception data at every sample timing.

3. A matched filter comprising:

a data division section for dividing in-phase and quadrature-phase reception data into a plurality of data entities, wherein said reception data is obtained by converting an analog signal for the in-phase and the quadrature-phase spread-spectrum modulated by in-phase and quadrature-phase spread codes into a digital form at a specified sample rate, and for outputting said plurality of data entities as divided data in a time-sharing manner at a rate equivalent to said sample rate doubled and multiplied by the number of divisions;
a data storage section for storing said divided data output from said data division section and outputting said stored divided data for each chip in a time-sharing manner at a rate equivalent to said sample rate doubled and multiplied by the number of divisions;
a despread code generation section for generating and outputting in-phase and quadrature-phase despread codes respectively identical to said in-phase and quadrature-phase spread codes in units of chips;
an in-phase correlation operation section comprising a plurality of multipliers and adders for performing a product-sum operation between said divided data output from said data storage section and said in-phase despread code output from said despread code generation section in a time-sharing manner at a rate equivalent to said sample rate doubled and multiplied by the number of divisions and for outputting a correlation operation result;
a quadrature-phase correlation operation section comprising a plurality of multipliers and adders for performing a product-sum operation between said divided data output from said data storage section and said quadrature-phase despread code output from said despread code generation section in a time-sharing manner at a rate equivalent to said sample rate doubled and multiplied by the number of divisions and for outputting a correlation operation result;
a data restoration section synthesizing correlation operation results of divided data originating from the same reception data out of correlation operation results of divided data output from said in-phase correlation operation section and said quadrature-phase correlation operation section and for outputting a synthesis result as a correlation operation of reception data; and
a complex operation section for performing a complex operation based on a correlation operation result of said reception data output from said data restoration section and for generating correlation output for in-phase and quadrature-phase reception data at every sample timing.

**4.** A matched filter comprising:

a data division section for dividing in-phase and quadrature-phase reception data into a plurality of data entities, wherein said reception data is obtained by converting an analog signal for the in-phase and the quadrature-phase spread-spectrum modulated by in-phase and quadrature-phase spread codes into a digital form at a specified sample rate, and for outputting said plurality of data entities as divided data in a time-sharing manner at a rate equivalent to said sample rate doubled and multiplied by the number of divisions;

a data storage section for storing said divided data output from said data division section and outputting said stored divided data for each chip in a time-sharing manner at a rate equivalent to said sample rate doubled and multiplied by the number of divisions;

a despread code generation section for generating and outputting in-phase and quadrature-phase despread codes respectively identical to said in-phase and quadrature-phase spread codes in units of chips;

a correlation operation section comprising a plurality of multipliers and adders for performing a product-sum operation between said divided data output from said data storage section and despread codes for said in-phase and said quadrature-phase output from said despread code generation section in a time-sharing manner at a rate equivalent to said sample rate doubled and multiplied by the number of divisions and for outputting a correlation operation result;

a data restoration section for synthesizing results of a correlation operation at said rate using the same source reception data and a despread code for the same phase output of correlation operation results of divided data output from said correlation operation section and for outputting a synthesis result as a correlation operation result of the reception data; and

a complex operation section for performing a complex operation based on a correlation operation result of said reception data output from said data restoration section and for generating correlation output for in-phase and quadrature-phase reception data at every sample timing.

**5.** The matched filter according to one of claims 2 to 4, wherein in-phase and quadrature-phase reception data is respectively divided into two parts, namely high-order bits and low-order bits in units of bits.

**6.** A CDMA communication receiver for demodulating a spread spectrum modulated analog signal for the in-phase and the quadrature-phase by using the matched filter described in one of claims 2 to 5 based on correlation output for the in-phase and the quadrature-phase at every sample timing.

# FIG.1

FIG.2

15.36MHz
Clock

61.44MHz
Clock

Chip Timing

I-phase IN

| $DI_1$ | $DI_2$ | $DI_3$ | $DI_4$ | $DI_5$ |
|---|---|---|---|---|

Q-phase IN

| $DQ_1$ | $DQ_2$ | $DQ_3$ | $DQ_4$ | $DQ_5$ |
|---|---|---|---|---|

Data division counter

| 0 | 1 | 2 | 3 | 0 | 1 | 2 | 3 | 0 | 1 | 2 | 3 | 0 | 1 | 2 | 3 | 0 | 1 | 2 | 3 |
|---|---|---|---|---|---|---|---|---|---|---|---|---|---|---|---|---|---|---|---|

Data division section output

| $DI_{1L}$ | $DI_{1U}$ | $DQ_{1L}$ | $DQ_{1U}$ | $DI_{2L}$ | $DI_{2U}$ | $DQ_{2L}$ | $DQ_{2U}$ | $DI_{3L}$ | $DI_{3U}$ | $DQ_{3L}$ | $DQ_{3U}$ | $DI_{4L}$ | $DI_{4U}$ | $DQ_{4L}$ | $DQ_{4U}$ | $DI_{5L}$ | $DI_{5U}$ | $DQ_{5L}$ | $DQ_{5U}$ |
|---|---|---|---|---|---|---|---|---|---|---|---|---|---|---|---|---|---|---|---|

EP 1 207 660 A2

FIG.3

Register 1

Data division
section output

( 1:0 )

Register 2

( 3:2 )

Register 3

( 5:4 )

Register 256

256 32-bit registers

( 511:510 )

FIG.4

FIG.5

Adder section    Multiplier section output    512    First adder group

First adder group comprising 128 adders each with 2-bit input and 3-bit output

Second adder group comprising 64 adders each with 3-bit input and 4-bit output

Third adder group comprising 32 adders each with 4-bit input and 5-bit output

Fourth adder group comprising 16 adders each with 5-bit input and 6-bit output

Fifth adder group comprising 8 adders each with 6-bit input and 7-bit output

Sixth adder group comprising 4 adders each with 7-bit input and 8-bit output

Seventh adder group comprising 2 adders each with 8-bit input and 9-bit output

Eighth adder group comprising 1 adders each with 9-bit input and 10-bit output

Second adder group
Third adder group
Fourth adder group
Fifth adder group
Sixth adder group
Seventh adder group
Eighth adder group

(1:0)
(3:2)
(5:4)
(7:6)
(9:8)
(11:10)
501:500
503:502
505:504
507:506
509:508
511:510

Adder section output

FIG.6

EP 1 207 660 A2

EP 1 207 660 A2

FIG.7

# FIG.8

I_OUT

Q_OUT

708 — Data restoration section

709 — Complex operation section

707

706

702

705 — Q-phase Tap coefficient register

701 — Data division section

704 — I-phase Tap coefficient register

703 — Tap coefficient control section

I-Phase IN

Q-Phase IN

FIG.9

EP 1 207 660 A2

# FIG.10

# FIG.11

I-Phase IN

Q-Phase IN

1301
Data division section

1302

1303
Tap coefficient control section

1304
I-phase Tap coefficient register

1305
Q-phase Tap coefficient register

1306

1307
Data restoration section

1308
Complex operation section

I_OUT

Q_OUT

# FIG.12
# (PRIOR ART)

EP 1 207 660 A2

15.36MHz Clock

Data I

| DI 1 | DI 2 | DI 3 | DI 4 | DI 5 | DI 6 | DI 7 | DI 8 | DI 9 | DI 10 | DI 11 | DI 12 | DI 13 | DI 14 |

Chip Timing

Code I

FIG.13
(PRIOR ART)

# FIG.14
# (PRIOR ART)

# FIG.15
# (PRIOR ART)

# FIG.16
# (PRIOR ART)

## FIG.17
## (PRIOR ART)

Adder section

Multiplier section output

1024

Adder section output

First adder group
Second adder group
Third adder group
Fourth adder group
Fifth adder group
Sixth adder group
Seventh adder group
Eighth adder group

(3:0)
(7:4)
(11:8)
(15:12)
(19:16)
(23:20)
1003:1000
1007:1004
1011:1008
1015:1012
1019:1016
1023:1020

First adder group comprising 128 adders each with 4-bit input and 5-bit output

Second adder group comprising 64 adders each with 5-bit input and 6-bit output

Third adder group comprising 32 adders each with 6-bit input and 7-bit output

Fourth adder group comprising 16 adders each with 7-bit input and 8-bit output

Fifth adder group comprising 8 adders each with 8-bit input and 9-bit output

Sixth adder group comprising 4 adders each with 9-bit input and 10-bit output

Seventh adder group comprising 2 adders each with 10-bit input and 11-bit output

Eighth adder group comprising 1 adders each with 11-bit input and 12-bit output